# EUROPÄISCHE PATENTSCHRIFT

(11) **EP 0 945 312 B1**
(45) Veröffentlichungstag und Bekanntmachung des Hinweises auf die Patenterteilung: **17.12.2003**
(21) Anmeldenummer: 99104823.2
(22) Anmeldetag: 11.03.1999
(51) Int. Cl.: B60R 21/20

(54) **Airbag-Vorrichtung für ein Kraftfahrzeug**
Airbag device for a vehicle
Dispositif de coussin de sécurité pour véhicule

(30) Priorität: 25.03.1998 DE 19813054
(43) Veröffentlichungstag der Anmeldung: 29.09.1999
(73) Patentinhaber: DaimlerChrysler AG, 70567 Stuttgart (DE); TRW Occupant Restraint Systems GmbH, 73551 Alfdorf (DE)
(72) Erfinder: Henkel, Jörg, 73033 Göppingen (DE); Müller, Manfred, 73779 Deizisau (DE); Rudolf, Harald, 72072 Tübingen (DE); Wiesner, H.-Dieter, 73527 Schwäbisch Gmünd (DE); Disam, Wolfgang, 73568 Durlangen (DE)

(56) Entgegenhaltungen:
- WO-A-97/42061
- DE-C- 19 631 556
- DE-U- 29 711 679
- US-A- 5 348 343
- PATENT ABSTRACTS OF JAPAN vol. 1995, no. 11, 26. Dezember 1995 (1995-12-26) & JP 07 215156 A (IKEDA BUSSAN CO LTD), 15. August 1995 (1995-08-15)

## Beschreibung

Die Erfindung betrifft eine Airbag-Vorrichtung für ein Kraftfahrzeug mit einem Gehäuse, in dem ein schlagartig durch eine Gehäuseöffnung expandierbarer Airbag angeordnet ist, wobei die Gehäuseöffnung im Ruhezustand des Airbags durch eine flexible Schutzabdeckung abgedeckt ist, die mit wenigstens einer Reißstelle versehen ist, wobei die Schutzabdeckung derart gestaltet ist, daß sie den Airbag während der Expansion wenigstens über einen Teil seines Ausdehnungsweges allseitig flankiert.

Eine Airbag-Vorrichtung dieser Art ist aus der Patentschrift DE 39 10 337 C2 bekannt, bei der der Airbag in einem Gehäuse gelagert ist, wobei zwei jeweils an einer Seite des Gehäuses befestigte Zwangslappen vorgesehen sind, die im Ruhezustand des Airbags im Bereich der Auslaßöffnung über diesen gefaltet sind. Bei einer Expansion des Airbags werden die Zwangslappen nach außen geschlagen, wodurch sie zwei einander gegenüberliegende Seiten der Auslaßöffnung abdecken und so eine Beschädigung des Airbags bei der Expansion vermeiden sollen.

Ferner ist aus der EP 0 397 154 B1 eine Airbag-Vorrichtung für ein Kraftfahrzeug bekannt. Dort ist ein Gehäuse eines schlagartig aufblasbaren Airbags mit einer flexiblen Schutzabdeckung verschlossen, die im wesentlichen als ein aus Kunststoff gefertigtes, flexibles Polsterelement ausgeführt ist. Das Polsterelement ist entlang seines Randes fest mit einem steifen Rahmen verbunden und weist in der Mitte eine Sollbruchstelle auf, an der das Polsterelement beim Aufblasen des Airbags in zwei Teile geteilt wird, die zur Seite aus der Bewegungsrichtung des Airbags heraus verschwenkbar sind.

Aus der Patentschrift DE 196 31 556 C1 ist eine Airbag-Vorrichtung mit einem aufblasbaren Airbag bekannt, dem ein Führungsschlauch zugeordnet ist. Der Führungsschlauch ist über einen ringförmigen Befestigungsbereich an seinem ersten Ende an einem Gehäuse der Airbag-Vorrichtung oder direkt an dem Airbag selbst unlösbar festgelegt. An seinem anderen Ende weist er eine in der Ruheposition verschlossene, als Reißstelle dienende Naht auf. Der Führungsschlauch umgibt den Airbag allseitig und ist in der Ruheposition um den Airbag und/oder das Gehäuse herumgefaltet. Bei einem Aufblasen des Airbags streckt sich der Führungsschlauch und bildet einen Schußkanal, in dem der Airbag expandiert. Im Verlauf der Expansion reißt der Airbag die Nahtstelle am Ende des Führungsschlauchs auf und tritt aus diesem aus.

Aufgabe der Erfindung ist es, eine Airbag-Vorrichtung der eingangs genannten Art zu schaffen, die eine gleichmäßige Expansion des Airbags bei verbessertem Schutz vor Beschädigungen während der Expansion des Airbags ermöglicht und die geeignet ist, die Entfaltungsgeschwindigkeit des Airbags mit einfachen Mitteln zu beeinflussen.

Diese Aufgabe wird erfindungsgemäß dadurch gelöst, dass die flexible Schutzabdeckung mit wenigstens zwei verschiedenen Reißstellen versehen ist, die in Expansionsrichtung derart zueinander versetzt angeordnet sind, dass die Schutzabdeckung bei der Expansion des Airbags schrittweise aufreißt. Hinzu kommt, dass ein den Airbag abdeckendes Flächengebilde der Schutzabdeckung im Ruhezustand in Zick-Zack-Falten gelegt ist, wobei die einzelnen Zick-Zack-Lagen mittels Reißnähten verbunden sind, so dass eine gleichmäßige Ausdehungs geschwindigkeit des Airbags während der Expansion erreicht wird. Das somit erzielte, zeitlich und räumlich versetzt erfolgende Aufreißen der Reißstellen bewirkt eine gleichmäßige Ausdehungsgeschwindigkeit des Airbags während der Expansion, so dass die Belastung eines mit dem sich ausdehnenden Airbag in Kontakt gelangenden Insassen, insbesondere in der Anfangsphase des Expansionsvorganges, minimiert wird. Ferner bildet die Schutzabdeckung eine trichter- oder röhrenförmige Führung für den Airbag, die verhindert, dass der Airbag bei der Expansion durch ein Hängenbleiben an Bauteilen oder durch Reibung gebremst wird. Schließlich gewährleistet die Schutzabdeckung durch eine wenigstens bereichsweise Flankierung des Airbags auf allen Seiten, daß der Airbag beim Durchtritt durch die Gehäuseöffnung keine Beschädigung erfährt.

In Ausgestaltung der Erfindung weist die Schutzabdeckung ein inneres und ein äußeres Flächengebilde auf, die zumindest ungefähr rechtwinklig versetzt zueinander an jeweils gegenüberliegenden Befestigungsstellen am Gehäuse festgelegt sind, wobei das innere Flächengebilde die Gehäuseöffnung eben überdeckt und mit einer zentralen Reißstelle in Form einer ersten Reißlinie versehen ist, und wobei das äußere Flächengebilde an zu den Befestigungsstellen des inneren Flächengebildes etwa rechtwinklig versetzten Befestigungsstellen festgelegt ist, in einem zentralen Bereich eine zweite Reißlinie aufweist und in eine wenigstens dreilagige Zickzack-Faltung gelegt ist. Dadurch wird auf besonders einfache Weise zuverlässig ein sukzessives Aufreißen der Schutzabdeckung bei einer Expansion des Airbags gewährleistet. Die Schutzabdekkung wird durch die vorzugsweise rechtwinklig zueinander ausgerichteten Reißlinien in wenigstens vier einseitig am Gehäuse festgelegte Flächenabschnitte geteilt, die sich über den Randbereich der Gehäuseöffnung legen und diesen weitgehend abdecken.

In weiterer Ausgestaltung der Erfindung sind mehrere Lagen der Zickzack-Faltung mit Hilfe wenigstens eines Befestigungselementes miteinander verbunden. Das Befestigungselement, das insbesondere als zu einer Reißnaht vernähter Reißfaden ausführbar ist, wird bei der Expansion des Airbags entweder zerstört oder aus der Schutzabdeckung gerissen, wobei die Bewegung des sich ausdehnenden Airbags gezielt und definierbar gebremst wird.

In weiterer Ausgestaltung der Erfindung sind das äußere und das innere Flächengebilde in einem gemeinsamen Materialzuschnitt integriert, wobei das äußere Flächengebilde rechtwinklig zu dem inneren Flächengebilde gefaltet ist. Dadurch läßt sich die gesamte Schutzabdeckung auf einfache Weise aus einer Materialbahn fertigen, so daß das äußere und das innere Flächengebilde zuverlässig und genau gegeneinander ausgerichtet werden können.

Weitere Vorteile und Merkmale der Erfindung ergeben sich aus den Unteransprüchen. Nachfolgend sind bevorzugte Ausführungsbeispiele der Erfindung beschrieben und anhand der Zeichnungen dargestellt. Es zeigen:
- Fig. 1: schematisch in einer perspektivischen Darstellung ein aufgeschnittenes Gehäuse einer erfindungsgemäßen Airbag-Vorrichtung mit einer Schutzabdeckung im Bereich einer frontseitigen Gehäuseöffnung,
- Fig. 2a bis 2c: in mehreren Seitenansichten in Richtung des Pfeiles X in Fig. 1 das Funktionsprinzip der erfindungsgemäßen Airbag-Vorrichtung bei einer Expansion des Airbags,
- Fig. 3: in einer perspektivischen Darstellung die Frontseite des Gehäuses nach Fig. 1 nach der Expansion des Airbags, wobei ein Gehäusedeckel in eine Öffnungsposition verschwenkt und die Schutzabdeckung aufgerissen sind,
- Fig. 4: in einer perspektivischen Darstellung eine Schutzabdekkung eines zweiten Ausführungsbeispiels der erfindungsgemäßen Airbag-Vorrichtung.

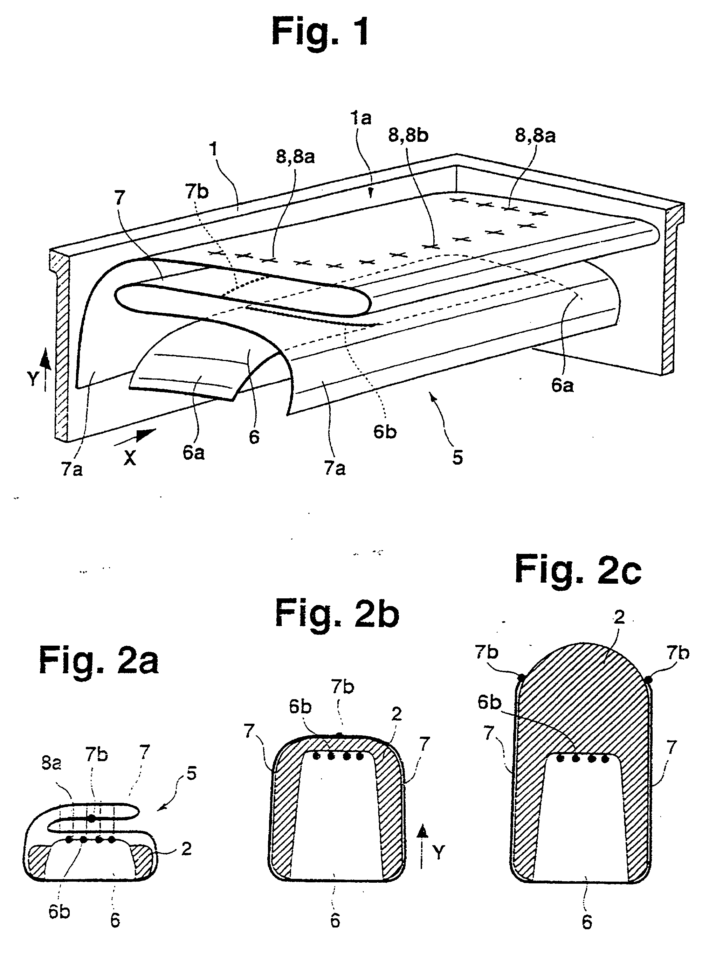

In den Figuren 1 bis 3 ist ein erstes Ausführungsbeispiel einer Airbag-Vorrichtung für ein Kraftfahrzeug dargestellt. Die Airbag-Vorrichtung weist ein Gehäuse 1 auf, in dem ein Airbag 2 in seiner Ruhelage auf kleinstmöglichem Raum zusammengefaltet untergebracht ist. Dem Airbag 2 ist ein nicht dargestellter Gasgenerator zugeordnet, der in der Lage ist, den Airbag mit einer Gasfüllung schlagartig unter Druck zu setzen und aufzublasen. Das Gehäuse 1 der Airbag-Vorrichtung ist in Form eines Beifahrer-Airbags vorzugsweise in einer Instrumententafel des Kraftfahrzeuges derart angeordnet, daß seine frontseitige Gehäuseöffnung 1a den Kraftfahrzeuginsassen zugewandt ist. Die Gehäuseöffnung 1a ist in nicht dargestellter Weise mit Hilfe eines Deckels 4 verschlossen, der auch als integraler Bestandteil der Instrumententafel 3 gestaltet sein kann. In alternativen Ausführungsbeispielen kann die Airbag-Vorrichtung auch in Form eines Fahrer-Airbags im Lenkrad des Kraftfahrzeuges oder in Form eines Seitenaufprall-Airbags in einer Innenraumverkleidung oder in einem Fahrzeugsitz untergebracht sein oder kann auch die Funktion eines schützenden Kniebags oder eines Windowbags übernehmen.

Im Bereich der Gehäuseöffnung 1a ist zwischen dem im Ruhezustand gefalteten Airbag und dem Deckel 4 eine flexible Schutzabdeckung 5 angeordnet, die die Gehäuseöffnung 1a im wesentlichen überdeckt und zugleich den Airbag an seiner Oberseite wenigstens teilweise umgreift.

Die Schutzabdeckung 5 weist ein erstes, inneres Flächengebilde in Form einer Materialbahn 6 auf, die direkt an dem Airbag im Ruhezustand anliegend die Gehäuseöffnung 1a eben überdeckt. Die Materialbahn 6 ist an zwei einander gegenüberliegenden Endbereichen 6a fest mit dem Gehäuse 1 verbunden und weist eine vorzugsweise mittig zwischen den Endbereichen 6a quer durch die Materialbahn verlaufende, als Reiß- oder Sollbruchstelle dienende Reißlinie 6b auf. Des weiteren umfaßt die Schutzabdeckung 5 ein zweites, äußeres Flächengebilde in Form der Materialbahn 7. Diese überdeckt die Gehäuseöffnung 1a quer zu der inneren Materialbahn 6 und ist daher an ihren Endbereichen 7a zu der ersten Materialbahn 6 hier um vorzugsweise etwa 90° versetzt in dem Gehäuse 1 festgelegt. Die äußere Materialbahn 7 ist ferner derart in eine Zickzack-Faltung gelegt, daß sie die Gehäuseöffnung 1a wenigstens bereichsweise dreilagig überdeckt. In der Querrichtung der äußeren Materialbahn 7 verlaufend und vorzugsweise in der mittleren Lage der Zickzack-Faltung angeordnet ist eine als Reiß- oder Sollbruchstelle dienende Reißlinie 7b vorgesehen, die in etwa rechtwinklig zu der Reißlinie 6b verläuft. Ergänzend sind außerdem als Befestigungselemente dienende, zu Reißnähten vernähte Reißfäden 8 vorgesehen, die die Lagen der Zickzack-Faltung miteinander verbinden. Dabei sind vorzugsweise wenigstens zwei einander gegenüberliegend an den Seiten der äußeren Materialbahn 7 angeordnete Nähte 8a vorgesehen, die überdies symmetrisch zu der Reißlinie 7b ausgestaltet sind. Ferner können weitere, parallel zur Reißlinie 7b angeordnete Nähte 8b vorgesehen werden.

Als Werkstoffe für die Materialbahnen 6 und 7 kommen Gewebe und Folien aller Arten in Frage, insbesondere Kunstfaser- oder Kevlar-Gewebe, Kunststoff-Folien, Tyvek-Papier oder Vliesstoffe. Dabei können die Reißlinien 6b, 7b als beliebig ausführbare Materialschwächung, insbesondere als Perforation, Materialstärkereduzierung oder partielle Durchtrennung von Fasern ausgeführt werden. Anstelle der Reißfäden 8 können auch beliebige andere Befestigungselemente, wie Nieten, Klammern oder Klebepunkte zur Anwendung kommen.

Die Wirkungsweise der erfindungsgemäßen Airbag-Vorrichtung ergibt sich insbesondere aus den Fig. 2a bis 2c wie folgt. Im Fall einer Kollision wird der Airbag 2 mit Hilfe des nicht dargestellten Gasgenerators innerhalb kürzester Zeit aus seiner gefalteten Ruheposition in Richtung des Pfeiles Y (Expansionsrichtung) in eine aufgeblasene Funktionsposition gebracht, wobei frühzeitig der Deckel 4, vorzugsweise mit Hilfe des sich ausdehnenden Airbags, geöffnet bzw. von der Gehäuseöffnung 1a entfernt wird. In der Anfangsphase des Expansionsvorganges des Airbags 2 stößt dieser gegen die vier Lagen der Schutzabdeckung 5 (Fig. 2a). Da die innere Materialbahn 6 den Airbag 2 chne wesentlichen Materialüberschuß straff abdeckt, wird die Expansion des Airbags 2 zunächst von der inneren Materialbahn 6 gebremst. Die vorgesehene Reißlinie 6b, die entsprechend auszulegen ist, versagt bei einer ausreichenden Druckkraft seitens des Airbags, so daß sich dieser weiter ausdehnen kann und nunmehr gegen die äußere Materialbahn 7 drückt. Die Kraft des Airbags 2 führt zu einer Entfaltung der Zickzack-Faltung der äußeren Materialbahn 7, wobei die Nähte 8 sukzessive aufreißen. Dabei wird die Expansion des Airbags wiederum in definierbarer Weise geringfügig abgebremst, wobei die Festigkeit der Fäden der Nähte 8 unterhalb der Reißfestigkeit des Werkstoffs der Materialbahn 7 liegen sollte, um eine Zerstörung der Materialbahn zu vermeiden.

Wie aus Fig. 2b ersichtlich ist, gestattet der in der Zickzack-Faltung untergebrachte Materialüberschuß eine weitere Ausdehnung des Airbags, wobei dieser von der äußeren Materialbahn 7 weiterhin umgriffen bleibt. Ab einer bestimmten Ausdehnung des Airbags 2 reißt schließlich auch die Reißlinie 7b der äußeren Materialbahn, wodurch der Airbag 2 aus der Schutzabdeckung 5 freigegeben wird.

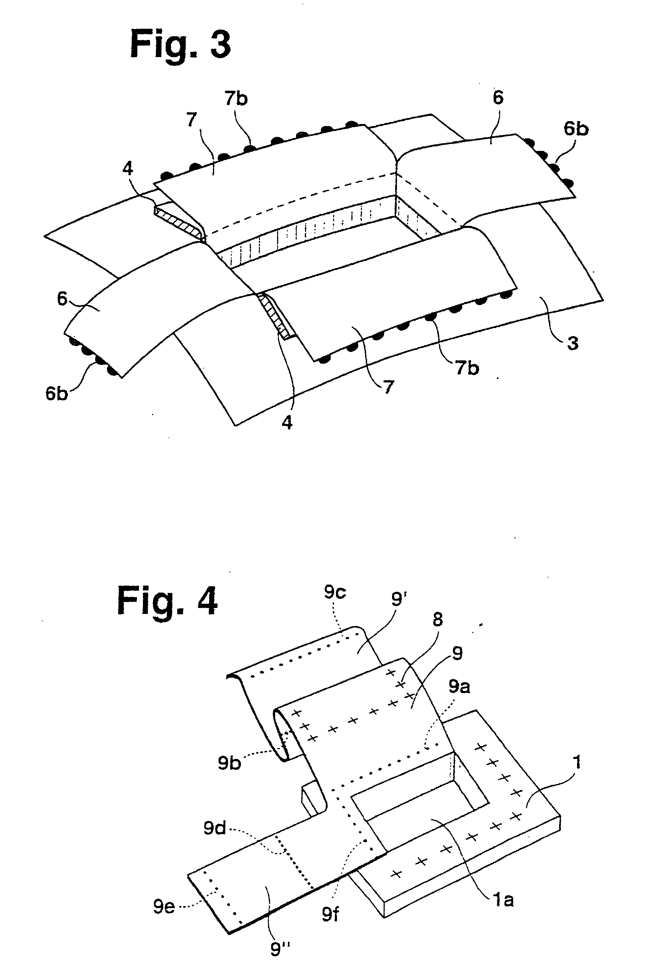

Im Verlauf der weiteren Expansion des Airbags werden die nunmehr voneinander getrennten Teile der inneren und äußeren Materialbahn nach außen geklappt, so daß sie, wie in Fig. 3 dargestellt, die Ränder des Gehäuses 1 und der zugehörigen, ursprünglich vom Deckel 4 abgedeckten Aussparung in der Instrumententafel 3 abdecken und so den sich weiter expandierenden Airbag 2 vor Beschädigungen, beispielsweise an Bruchstellen des Deckels 4 und der Instrumententafel 3 schützen. Die Materialbahnen können mit einem Endbereich am Gehäuse 1, an einem Airbagmodul oder auch an der Instrumententafel festgelegt werden.

In Fig. 4 ist ein zweites Ausführungsbeispiel der erfindungsgemäßen Airbag-Vorrichtung dargestellt. Es unterscheidet sich von dem ersten Ausführungsbeispiel im wesentlichen dadurch, daß das innere Flächengebilde 6 und das äußere Flächengebilde 7 einstükkig aus einem gemeinsamen Materialzuschnitt 9 hergestellt und somit in diesen integriert sind. Das dabei vorgesehene Flächengebilde weist eine im wesentlichen L-förmige Grundform auf, in die im Kreuzungsbereich der beiden Schenkel 9', 9'' der L-Form eine Aussparung für die Gehäuseöffnung 1a geschnitten ist. Der Materialzuschnitt 9, der in Analogie zum ersten Ausführungsbeispiel zwei rechtwinklig zueinander angeordnete, sich jeweils quer über einen Schenkel der L-Form erstreckende Perforationen 9b, 9d aufweist, ist zunächst in einem L-förmigen Befestigungsbereich 9a, 9f an der Oberseite des Gehäuses 1 der Airbag-Vorrichtung besonders einfach mit Hilfe mehrerer Befestigungselemente wie Nieten oder Klammern festlegbar. Wie im ersten Ausführungsbeispiel gemäß den Fig. 1 bis 3 weist der Teil 9' des L-förmigen Materialzuschnittes 9 eine Zickzack-Faltung auf, die vorzugsweise den Bereich einer Perforation 9b als mittlere Lage einschließt und über mehrere Nähte 8 in sich fixiert ist.

Ausgehend von der Montageanfangsposition gemäß Fig. 4 wird zunächst der Abschnitt 9'' ohne Faltung des Materialzuschnitts 9 um den benachbarten Befestigungsbereich 9f über die Gehäuseöffnung 1a hinweg umgelegt, bevor anschließend der Abschnitt 9' mit der Zickzack-Faltung quer zum Abschnitt 9'' über die Gehäuseöffnung 1a gelegt wird. Eine abschließende Festlegung der Schutzabdeckung 9 erfolgt auf besonders einfache Weise an den Bereichen 9c, 9e, wobei die Perforationen 9b und 9d um vorzugsweise 90° versetzt zueinander angeordnet sind.

Mit Hilfe der anhand der beiden Ausführungsbeispiele dargestellten Airbag-Vorrichtung, deren erfindungswesentlicher Bestandteil die flexible Schutzabdeckung 5, 9 ist, wird eine Art Gleitbahn für den expandierenden Airbag 2 geschaffen, die den Airbag zum einen wirksam vor Beschädigungen schützt und zum anderen eine gleichmäßige, reibungsarme Ausdehnung des Airbags gewährleistet. Ferner bewirkt ein gestuftes Aufreißen der Schutzabdeckung 5, 9 eine insbesondere anfänglich gebremste Expansion des Airbags und somit eine gleichmäßige Ausdehnungsgeschwindigkeit. Dadurch wird die Sicherheit der Kraftfahrzeuginsassen erhöht, die sich in unmittelbarer Nähe zum expandierenden Airbag befinden ("Smart Restraint"). Wesentlich ist zudem die Führungsfunktion der anhand der Fig. 1 bis 3 bzw. 4 beschriebenen Schutzabdeckung für den Airbag, die eine gezielte Expansion in den gewünschten Aufprallbereich des menschlichen Körpers ermöglicht.

## Patentansprüche

1. Airbagvorrichtung für ein Kraftfahrzeug mit einem Gehäuse, in dem ein schlagartig durch eine Gehäuseöffnung expandierbarer Airbag angeordnet ist, wobei der Airbag im Ruhezustand durch eine flexible Schutzabdeckung abgedeckt ist, die mit wenigstens einer Reißstelle versehen ist, wobei die Schutzabdeckung derart gestaltet ist, dass sie den Airbag zumindest zeitweise während der Expansion wenigstens über einen Teil seines Ausdehnungsweges allseitig flankiert und mit wenigstens zwei verschiedenen Reißstellen (6b, 7b, 9b, 9d) versehen ist, die in Expansionsrichtung (Y) derart zueinander versetzt angeordnet sind, dass die Schutzabdeckung (5, 9) bei der Expansion des Airbags (2) schrittweise aufreist,
**dadurch gekennzeichnet,**
**dass** die Schutzabdeckung (5, 9) mindestens ein Flächengebilde (7, 9`) umfasst, das an jeweils gegenüberliegenden Befestigungsstellen (7a, 9a, 9c) fahrzeugfest festgelegt ist, wobei das Flächengebilde (7, 9`) den Airbag (2) eben überdeckt und mit einer Reißlinie (7b, 9b) versehen und in eine Zickzack-Faltung gelegt ist, wobei die Lagen der Zickzack-Faltung mittels Reißnähten (8)verbunden sind.

2. Airbagvorrichtung nach Anspruch 1,
**dadurch gekennzeichnet,**
**dass** zusätzlich zu dem ersten Flächengebilde (7, 9') ein zweites Flächengebilde (6, 9") vorgesehen ist, wobei die Befestigungsstellen (6a, 7a, 9a, 9c) der beiden Flächengebilde (7, 9'), 6, 9'') ungefähr rechtwinklig versetzt zueinander angeordnet sind.

3. Airbagvorrichtung nach Anspruch 2,
**dadurch gekennzeichnet,**
**dass** das zweite Flächengebilde (6, 9") ebenfalls mit einer Reißlinie (6b, 9d) versehen ist.

4. Airbagvorrichtung nach den Ansprüchen 2 oder 3,
**dadurch gekennzeichnet,**
**dass** das erste, äußere Flächengebilde (7, 9') über dem zweiten, inneren Flächengebilde (6, 9") angeordnet ist.

5. Airbagvorrichtung nach den Ansprüchen 2 bis 4,
**dadurch gekennzeichnet,**
**dass** die Reißlinie (7b, 9b) des äußeren Flächengebildes (7, 9`) rechtwinklig zur Reißlinie (6b, 9d) des inneren Flächengebildes (6, 9 ") verläuft.

6. Airbagvorrichtung nach den Ansprüchen 2 bis 5,
**dadurch gekennzeichnet,**
**dass** das äußere (9') und das innere Flächengebilde (9") in einem gemeinsamen Materialzuschnitt (9) integriert sind, wobei das äußere Flächengebilde (9') rechtwinklig zu dem inneren Flächengebilde (9") gefaltet ist.

7. Airbagvorrichtung nach Anspruch 2,
**dadurch gekennzeichnet,**
**dass** das innere Flächengebilde (6, 9") den Airbag 2 ohne wesentlichen Materialüberschuss abdeckt.

## Claims

1. An airbag device for a motor vehicle with a housing in which is positioned an airbag which is able to expand abruptly through a housing opening, the airbag being covered when non-operative by a flexible protective covering which is provided with at least one tear point, the protective covering being designed in such a manner that it flanks the airbag on all sides during at least part of its expansion along at least part of its expansion path and is provided with at least two tear points (6b, 7b, 9b, 9d) which are positioned offset in relation to one another in the direction of expansion (Y) in such a manner that the protective covering (5, 9) tears off in stages during the expansion of the airbag (2),
**characterised in that**
the protective covering (5, 9) comprises at least one flat structure (7, 9') which is fixed rigidly to the vehicle at opposing fixing points (7a, 9a, 9c), the flat structure (7, 9') covering the airbag (2), being provided with a tear line (7b, 9b) and being arranged in a concertina fold, the layers of the concertina fold being connected by means of welded seams (8).

2. An airbag device in accordance with claim 1,
**characterised in that**
in addition to the first flat structure (7, 9') there is also a second flat structure (6, 9"), the fixing points (6a, 7a, 9a, 9c) of the two flat structures (7, 9', 6, 9") being positioned offset at approximately right angles in relation to one another.

3. An airbag device in accordance with claim 2,
**characterised in that**
the second flat structure (6, 9") is also provided with a tear line (6b, 9d).

4. An airbag device in accordance with claims 2 or 3,
**characterised in that**
the first, outer flat structure (7, 9') is positioned above the second, inner flat structure (6, 9").

5. An airbag device in accordance with claims 2 to 4,
**characterised in that**
the tear line (7b, 9b) of the outer flat structure (7, 9') runs at right angles to the tear line (6b, 9d) of the inner flat structure (6, 9").

6. An airbag device in accordance with claims 2 to 5,
**characterised in that**
the outer (9') and the inner flat structure (9") are integrated in one common section of material (9), the outer flat structure (9') being folded at right angles to the inner flat structure (9").

7. An airbag device in accordance with claim 2,
**characterised in that**
the inner flat structure (6, 9") covers the airbag (2) with no significant material excess.

## Revendications

1. Dispositif de coussin à gaz pour un véhicule automobile avec un boîtier dans lequel est disposé un coussin à gaz pouvant de déployer de façon brusque à travers une ouverture du boîtier, le coussin à gaz étant recouvert en état de repos par un couvercle de protection souple muni d'un moins un point de déchirure et le couvercle de protection étant conçu de telle façon que, lors du déploiement, il entoure de tous les côtés le coussin à gaz au moins momentanément sur au moins une partie de son trajet d'expansion et étant muni d'au moins deux points de déchirure différents (6b, 7b, 9b, 9d) qui, en direction de déploiement (Y), sont disposés avec un décalage tel entre eux que, lors du déploiement du coussin à gaz (2), le couvercle de protection (5, 9) se déchire progressivement, **caractérisé en ce que** le couvercle de protection (5, 9) comprend au moins une structure de surface (7, 9') qui est fixée en solidarité avec le véhicule par l'intermédiaire de points de fixation (7a, 9a, 9c) se trouvant respectivement du côté opposé, la structure de surface (7, 9') recouvrant le coussin à gaz (2) de manière plane et étant munie d'une ligne de déchirure (7b, 9b) en étant posée dans un pli en zigzag, alors que les couches du pli en zigzag sont reliées à l'aide de coutures pouvant se déchirer (9).

2. Dispositif de coussin à gaz selon la revendication 1, **caractérisé en ce qu'**en plus de la première structure de surface (7, 9') est prévue une deuxième structure de surface (6, 9''), les points de fixation (6a, 7a, 9a, 9c) des deux structures de surface (7, 9', 6, 9'') étant disposés l'un par rapport à l'autre avec un décalage approximativement à angle droit.

3. Dispositif de coussin à gaz selon la revendication 2, **caractérisé en ce que** la deuxième structure de surface (6, 9") est également munie d'une ligne de déchirure (6b, 9d).

4. Dispositif de coussin à gaz selon l'une quelconque des revendications 2 ou 3, **caractérisé en ce que** la première structure de surface extérieure (7, 9') est disposée au-dessus de la deuxième structure de surface intérieure (6, 9'').

5. Dispositif de coussin à gaz selon l'une quelconque des revendications 2 à 4, **caractérisé en ce que** la ligne de déchirure (7b, 9b) de la structure de surface extérieure (7, 9') s'étend à angle droit par rapport à la ligne de déchirure (6b, 9d) de la structure de surface intérieure (6, 9").

6. Dispositif . de coussin à gaz selon l'une quelconque des revendications 2 à 5, **caractérisé en ce que** la structure de surface extérieure (9') et la structure de surface intérieure (9'') sont intégrées dans une découpe de matériau commune (9), la structure de surface extérieure (9') étant repliée à angle droit par rapport à la structure de surface intérieure (9").

7. Dispositif de coussin à gaz selon la revendication 2, **caractérisé en ce que** la structure de surface intérieure (6, 9") recouvre le coussin à gaz (2) sans surplus de matériau substantiel.
